# EUROPEAN PATENT APPLICATION

(11) **EP 2 759 858 A2**
(43) Date of publication of application: **30.07.2014**
(21) Application number: 13183010.1
(22) Date of filing: 04.09.2013
(51) Int. Cl.: G02B 6/122

(54) **Athermal waveguide and method of manufacturing the same**

(30) Priority: 29.01.2013 KR 20130010099
(71) Applicant: Samsung Electronics Co., Ltd, Gyeonggi-do 443-742 (KR)
(72) Inventor: Cho, Seong-ho, 449-712 Gyeonggi-do (KR); Mohammad, Rakib Uddin, Gyeonggi-do 449-712 (KR)
(74) Representative: Portch, Daniel

(57) **Abstract**

Provided are an athermal waveguide and a method of manufacturing the same. The athermal waveguide includes: a substrate having a protruded region; a first material layer formed on the protruded region to counteract thermal expansion; and a second material layer formed on the first material layer a position corresponding to the protruded region and formed of a same base material as the protruded region.

## Description

### FIELD OF THE INVENTION

The present disclosure relates to waveguides and methods of manufacturing the same.

### BACKGROUND OF THE INVENTION

A photonic device is manufactured by using a semiconductor substrate, and mainly includes a group IV material including silicon (Si), and a group III-V material, such as indium phosphide (InP) or indium gallium arsenic phosphorous (InGaAsP), in order to receive and transmit an optical signal. The photonic device also includes a dielectric material, such as silicon nitride (SiN) or silicon oxide (Si02). Refractive indexes of such materials vary as a temperature increases, and thus wavelength characteristics of devices sensitive to wavelengths may be twisted. For example, when Si02 is used, since a change of refractive indexes (n) according to temperatures (T), dn/dT is 0.1x10⁻⁴, a wavelength change is about 12 pm/K. Also, when Si is used, since dn/dT = 1.8x10⁻⁴, a wavelength change is about 80 pm/K. An athermal waveguide may be used in order to reduce such a wavelength change.

### SUMMARY OF THE INVENTION

Provided are athermal waveguides insensitive to polarization, and methods of manufacturing the same.

Additional aspects will be set forth in part in the description which follows and, in part, will be apparent from the description, or may be learned by practice of the presented example embodiments.

According to an example embodiment, an athermal waveguide includes: a substrate having a protruded region; a first material layer formed on the protruded region to balance thermal expansion; and a second material layer formed on the first material layer to correspond to the protruded region and formed of a same base material as the protruded region.

The first material layer may be formed of any one material selected from among a semiconductor, a polymer, titanium oxide, and a dielectric material.

The protruded region may be formed of crystalline silicon, and the second material layer may be formed of amorphous silicon or polysilicon.

The protruded region may be formed by etching the substrate.

A stacked structure of the protruded region, the first material layer, and the second material layer may be formed to protrude with respect to a top surface of the substrate.

The stacked structure may be exposed in air.

The athermal waveguide may further include a cladding formed to cover the stacked structure and at least a part of a remaining top surface of the substrate.

The cladding may be formed of oxide or nitride.

The first material layer may be formed to cover the protruded region and a remaining top surface of the substrate, and the second material layer may be formed on the first material layer to correspond to the protruded region.

The athermal waveguide may further include a cladding formed to cover a stacked structure of the protruded region, the first material layer, and the second material layer, and at least a part of a remaining top portion of the second material layer.

The cladding may be formed of oxide or nitride.

According to another example embodiment, a method of manufacturing an athermal waveguide, the method includes: etching a substrate such that a protruded region is formed; forming a first material layer that counteracts thermal expansion, on the protruded region; and forming a second material layer on the first material layer by using a same base material as the protruded region, to correspond to the protruded region.

A stacked structure of the protruded region, the first material layer, and the second material layer may be formed to protrude with respect to a top surface of the substrate.

The stacked structure may be exposed in air.

The method may further include forming cladding to cover the stacked structure and at least a part of a remaining top surface of the substrate.

The cladding may be formed of oxide or nitride.

The first material layer may be formed to cover the protruded region and a remaining top surface of the substrate, and the second material layer may be formed on a region of the first material layer to correspond to the protruded region.

The method may further include forming a cladding to cover a stacked structure of the protruded region, the first material layer, and the second material layer, and at least a part of a remaining top portion of the second material layer.

### BRIEF DESCRIPTION OF THE EMBODIMENTS

These and/or other aspects will become apparent and more readily appreciated from the following description of the embodiments, taken in conjunction with the accompanying drawings in which:
FIG. 1 is a cross-sectional view schematically illustrating an athermal waveguide according to an example embodiment;
FIGS. 2A and 2B illustrate mode profile distributions respectively in a transverse magnetic (TM) mode and a transverse electric (TE) mode in the athermal waveguide of FIG. 1;
FIG. 3A is a diagram of a waveguide having a general structure, wherein a polymer cladding is disposed on a protruded region;
FIG. 3B illustrates a mode profile distribution in a TM mode of the waveguide of FIG. 3A;
FIG. 4 is a cross-sectional view schematically illustrating an athermal waveguide according to another example embodiment;
FIG. 5 is a cross-sectional view schematically illustrating an athermal waveguide according to another example embodiment;
FIG. 6 illustrates a mode profile distribution in a TE mode of the athermal waveguide of FIG. 4;
FIG. 7 illustrates a mode profile distribution in a TE mode of the athermal waveguide of FIG. 5;
FIG. 8 is a graph showing that an athermal waveguide according to an example embodiment operates as a waveguide in a TE mode and a TM mode;
FIGS. 9A through 9G are diagrams for describing a method of manufacturing an athermal waveguide, according to an example embodiment; and
FIGS. 10A through 10F are diagrams for describing a method of manufacturing an athermal waveguide, according to another example embodiment.

### DETAILED DESCRIPTION OF THE DRAWINGS

Reference will now be made in detail to embodiments, examples of which are illustrated in the accompanying drawings, wherein like reference numerals refer to like elements throughout and sizes and thicknesses of elements may be exaggerated for clarity. In this regard, the present embodiments may have different forms and should not be construed as being limited to the descriptions set forth herein. Accordingly, the embodiments are merely described below, by referring to the figures, to explain aspects of the present description. Expressions such as "at least one of," when preceding a list of elements, modify the entire list of elements and do not modify the individual elements of the list.

Example embodiments will now be described more fully with reference to the accompanying drawings, in which some example embodiments are shown. In the drawings, the thicknesses of layers and regions are exaggerated for clarity. Like reference numerals in the drawings denote like elements.

Detailed illustrative embodiments are disclosed herein. However, specific structural and functional details disclosed herein are merely representative for purposes of describing example embodiments. Example embodiments may be embodied in many alternate forms and should not be construed as limited to only those set forth herein.

It should be understood, however, that there is no intent to limit this disclosure to the particular example embodiments disclosed. On the contrary, example embodiments are to cover all modifications, equivalents, and alternatives falling within the scope of the invention. Like numbers refer to like elements throughout the description of the figures.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of this disclosure. As used herein, the term "and/or," includes any and all combinations of one or more of the associated listed items.

It will be understood that when an element is referred to as being "connected," or "coupled," to another element, it can be directly connected or coupled to the other element or intervening elements may be present. In contrast, when an element is referred to as being "directly connected," or "directly coupled," to another element, there are no intervening elements present. Other words used to describe the relationship between elements should be interpreted in a like fashion (e.g., "between," versus "directly between," "adjacent," versus "directly adjacent," etc.).

The terminology used herein is for the purpose of describing particular embodiments only and is not intended to be limiting. As used herein, the singular forms "a," "an," and "the," are intended to include the plural forms as well, unless the context clearly indicates otherwise. It will be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof.

It should also be noted that in some alternative implementations, the functions/acts noted may occur out of the order noted in the figures. For example, two figures shown in succession may in fact be executed substantially concurrently or may sometimes be executed in the reverse order, depending upon the functionality/acts involved.

Various example embodiments will now be described more fully with reference to the accompanying drawings in which some example embodiments of the invention are shown. In the drawings, the thicknesses of layers and regions are exaggerated for clarity.

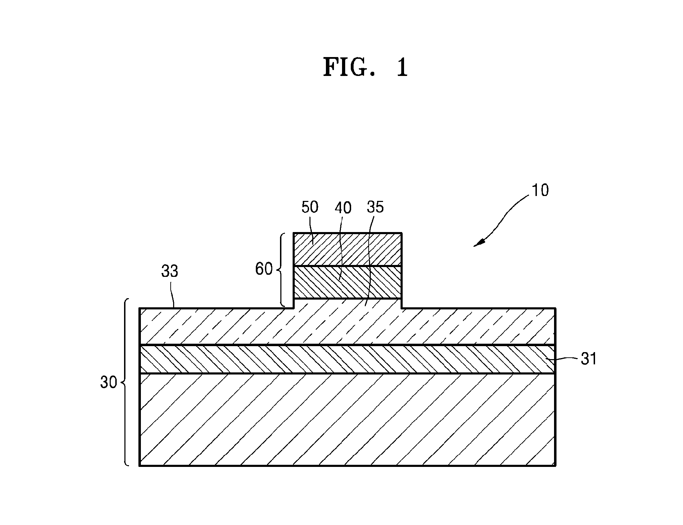

FIG. 1 is a cross-sectional view schematically illustrating an athermal waveguide according to an example embodiment.

Referring to FIG. 1, an athermal waveguide 10 may include a substrate 30 having a protruded region 35, a first material layer 40 formed on the protruded region 35 to balance thermal expansion, and a second material layer 50 formed on the first material layer 40 to correspond to the protruded region 35 and formed of a same base material as the protruded region 35.

The substrate 30 may be a silicon substrate 30 or a silicon on insulator (SOI) substrate, or alternatively, may be any one of various semiconductor substrates suitable for manufacturing a waveguide for light transmission, or a glass or plastic substrate. Hereinafter, FIG. 1 and other drawings indicate as an example where the substrate 30 is an SOI substrate in which an insulation layer 31 is embedded.

The protruded region 35 may be formed of a same material as a base material forming the substrate 30. By etching the substrate 30, excluding a region where the protruded region 35 is to be formed, by a predetermined (or alternatively, a desired) depth, the protruded region 35 may protrude on a top surface 33 of the substrate 30. In other words, the protruded region 35 may be formed by etching the substrate 30.

When the substrate 30 is an SOI substrate, the base material forming the substrate 30 is silicon. Accordingly, when the substrate 30 is a silicon substrate or an SOI substrate, the protruded region 35 may be formed of silicon. Here, since the protruded region 35 protrudes on the top surface 33 of the substrate 30 by etching the substrate 30, when the base material of the substrate 30 is silicon, the protruded region 35 may include crystalline silicon.

The first material layer 40 enables athermalness by balancing thermal expansion, and may be prepared such that a change of refractive indexes according to temperatures dn/dT is negative. The first material layer 40 may include at least any one material selected from among a semiconductor material, a polymer, and a dielectric material. For example, the first material layer 40 may include at least any one material selected from among a polymer and titanium oxide (Ti02). Here, when the first material layer 40 includes a semiconductor material, any semiconductor material may be used as long as a thermal expansion coefficient is balanced.

The second material layer 50 may be formed on the first material layer 40 to correspond to the protruded region 35. The second material layer 50 may be formed of a same base material as the protruded region 35. For example, when the protruded region 35 includes crystalline silicon, the second material layer 50 may include amorphous silicon (a-Si) or polysilicon (poly-Si). Alternatively, the second material layer 50 may include crystalline silicon (c-Si).

In the current embodiment, a stacked structure of the protruded region 35, the first material layer 40, and the second material layer 50, i.e., a waveguide region 60, may protrude on the top surface 33 of the substrate 30. Also, the stacked structure may be exposed in air.

Electromagnetic (EM) waves have electronic and magnetic components perpendicular to each other. A transverse mode is a particular electromagnetic field pattern of radiation measured in a plane perpendicular (i.e., transverse) to the propagation direction of a beam of electromagnetic radiation. Two traverse modes are a transverse magnetic (TM) mode in which no magnetic field is generated in the direction of propagation and a transverse electric (TE) mode in which no electric field is generated in the direction of propagation.

According to the athermal waveguide 10 of the current embodiment, the first material layer 40 that balances a thermal expansion is disposed at a center of the waveguide region 60. As such, when an athermal material is disposed at the center of the waveguide region 60 by forming the first material layer 40 between the protruded region 35 and the second material layer 50, the athermal waveguide 10 according to the current embodiment may operate as a satisfactory waveguide both in the transverse magnetic (TM) mode and the transverse electric (TE) mode.

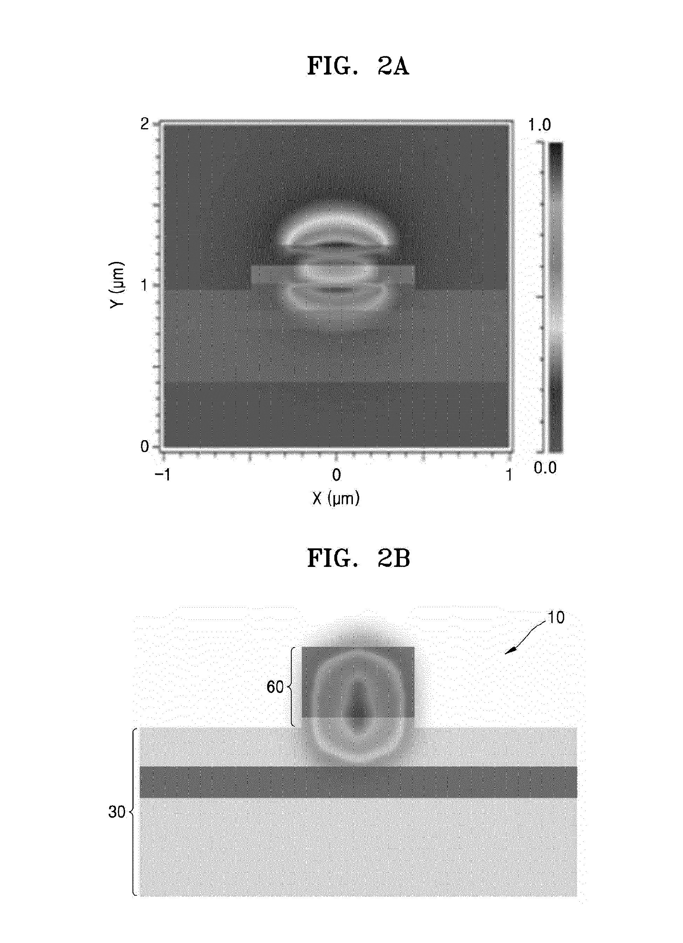

FIGS. 2A and 2B illustrate mode profile distributions respectively in a transverse magnetic (TM) mode and a transverse electric (TE) mode in the athermal waveguide of FIG. 1.

As shown in the TM mode profile of FIG. 2A, a structure where the first material layer 40 that is athermal is disposed on the protruded region 35 may operate as a satisfactorily waveguide in a TM mode.

Moreover, as shown in FIG. 2B, since the first material layer 40 that is athermal is disposed on the protruded region 35 and the second material layer 50 is disposed on the first material layer 40, the athermal waveguide 10 also satisfactorily operates in a TE mode.

As shown in FIG. 2B, by forming the waveguide region 60 in the stacked structure of the protruded region 35, the first material layer 40, and the second material layer 50, the first material layer 40, i.e., an athermal material layer, is disposed at the center of a mode, and thus light satisfactorily propagates along the athermal waveguide 10 without any loss in the TE mode.

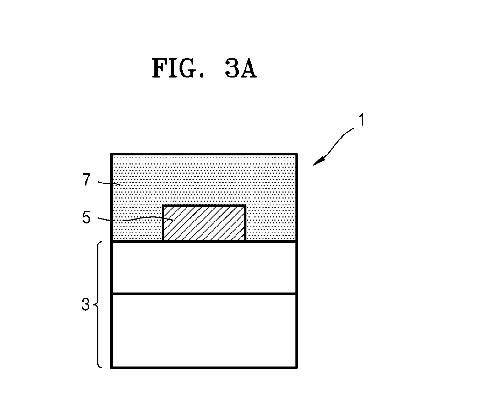

FIG. 3A is a diagram of a waveguide 1 having a general structure, wherein a polymer used as a cladding covers a protruded region.

As shown in FIG. 3A, a waveguide 1 has a polymer 7 used as a cladding to cover a protruded region 5 producing with respect to a substrate 3. In comparison to the waveguide 10 of FIG. 1, the structure of the waveguide 1 of FIG. 3a corresponds to a case where only the first material layer 40 is disposed on the protruded region 35 in the waveguide 10.

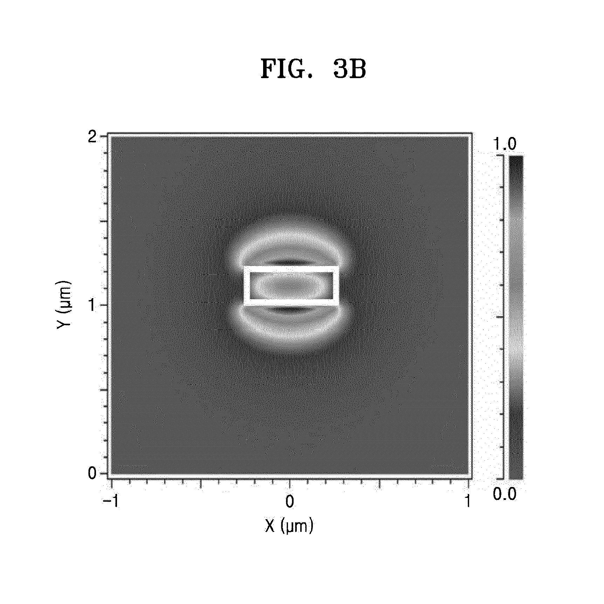

FIG. 3B illustrates a mode profile distribution in a TM mode of the waveguide of FIG. 3A;

As shown in FIG. 3B, the waveguide 1 having such a structure operates satisfactorily in a TM mode. However, the waveguide 1 may not operate satisfactorily in a TE mode because in the TE mode, an interaction with an athermal polymer is relatively low since the polymer 7 is disposed on the protruded region 5 forming the waveguide 1. Therefore, the waveguide 1 is sensitive to polarization.

On the other hand, as described above, when the waveguide region 60 has the stacked structure wherein the first material layer 40 that is athermal is disposed on the protruded region 35 and the second material layer 50 that is formed of the same base material as the protruded region 35 is disposed on the first material layer 40, the athermal waveguide 10 not only operates satisfactorily in the TM mode, but also in the TE mode as shown in FIGS. 2A and 2B.

As such, when the athermal material is disposed at the center of the waveguide region 60 by disposing the first material layer 40 between the protruded region 35 and the second material layer 50, the athermal waveguide 10 operates satisfactorily both in the TE mode and the TM mode, and thus a waveguide that is not sensitive by polarization may be realized.

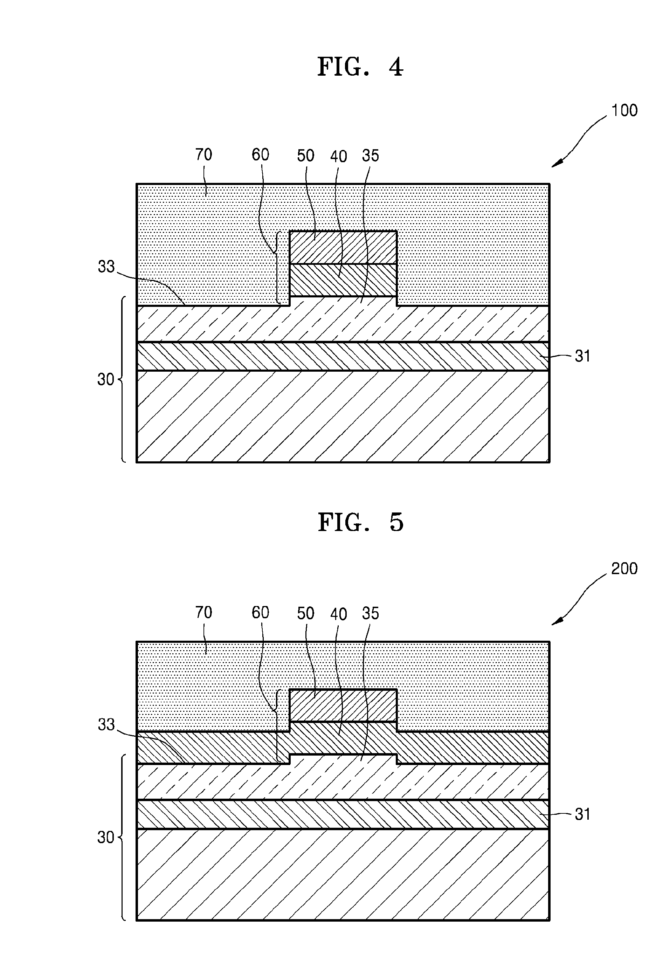

FIG. 4 is a cross-sectional view schematically illustrating an athermal waveguide according to another example embodiment.

As shown in FIG. 4, an athermal waveguide 100 has a structure similar to the structure of the athermal waveguide 10, however, the athermal waveguide 100 further includes a cladding 70 that covers the waveguide region 60, rather than having air operate as a cladding. The cladding 70 may include an oxide or a nitride. As such, an athermal waveguide according to example embodiments may include a cladding formed of air, as illustrated in FIG. 1 or formed of nitride or oxide, as illustrated in FIG. 4.

FIG. 5 is a cross-sectional view schematically illustrating an athermal waveguide according to another example embodiment.

As shown in FIG. 5, an athermal waveguide 200 has a structure similar to the structure of the athermal waveguide 10, however, in the athermal waveguide 200, the first material layer 40 covers the protruded region 35 and the remaining top surface 33 of the substrate 30 in the athermal waveguide 200. Moreover, the athermal waveguide 200 further includes the cladding 70 that covers the waveguide region 60, where the waveguide region 60 includes the stacked structure of the protruded region 35, the first material layer 40, and the second material layer 50, and at least a part of a remaining top portion of the second material layer 50. The cladding 70 may include an oxide or a nitride. Alternatively, the athermal waveguide 200 may not include the cladding 70. In this case, the stacked structure of the protruded region 35, the first material layer 40, and the second material layer 50, and the remaining top portion of the first material layer 40 may be exposed to air.

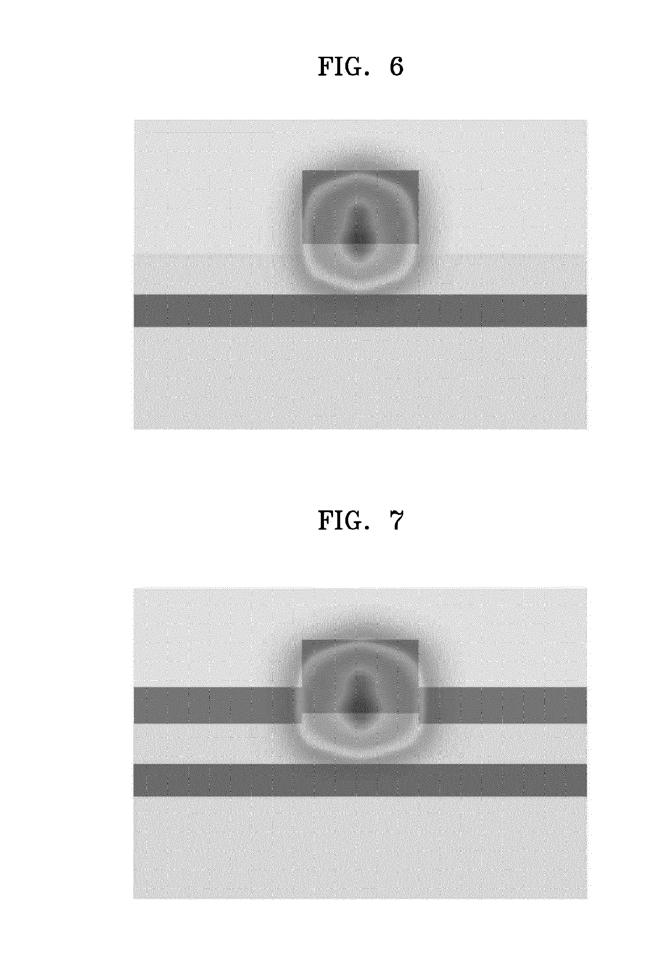

FIG. 6 illustrates a mode profile distribution in a TE mode of the athermal waveguide of FIG. 4 and FIG. 7 illustrates a mode profile distribution in a TE mode of the athermal waveguide of FIG. 5.

As shown in FIGS. 6 and 7, the waveguides 100 and 200 operate as satisfactory waveguides both in the TE mode and the TM mode even when thermal conditions change, since the first material layer 40 that balances thermal expansion is disposed at the center of the waveguide region 60 in the athermal waveguides 100 and 200 according to example embodiments, the athermal waveguides 100 and 200 reduce a change in wavelength. More specifically, as shown in FIGS. 2, 6, and 7, in the TE mode, since the athermal material is disposed at a mode center except that only the mode profile distributions are slightly changed, a satisfactory athermal effect may be obtained. Further, since the athermal waveguides 10, 100, and 200 are athermal both in the TE mode and the TM mode, the athermal waveguides 10, 100, and 200 may be insensitive to polarization.

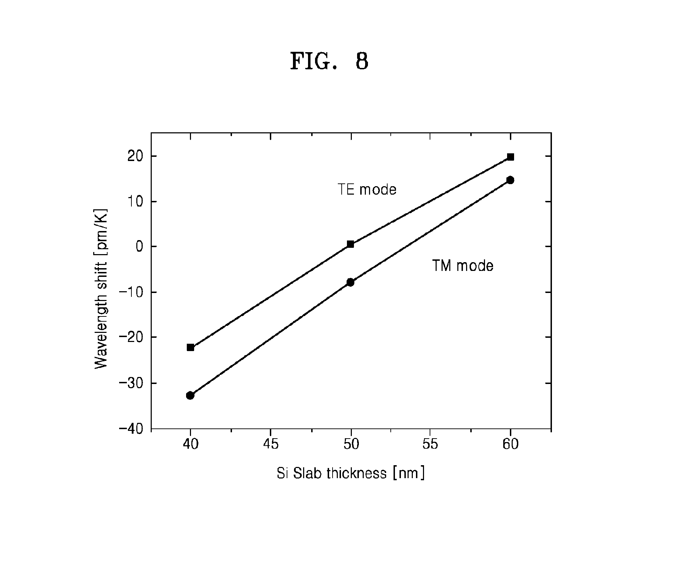

FIG. 8 is a graph showing that an athermal waveguide according to an example embodiment operates as a waveguide in a TE mode and a TM mode.

As shown in FIG. 8, a degree of athermal effect on an optical wavelength of 1.55 µm transmitted through the athermal waveguide varies according to a thicknesses of a silicon slab, when the athermal waveguide has a rib-type waveguide structure, wherein a rib width is about 420 nm, a thickness of a protruded region formed of crystalline silicon is about 50 nm, a thickness of a first material layer formed of athermal polymer is about 100 nm, and a thickness of a second material layer formed of polysilicon is about 50 nm.

As shown in FIG. 8, according to the athermal waveguide, an athermal effect is uniformly shown in both the TE mode and the TM mode. When a thickness of a slab is about 52 nm, the TM and TE mode both have an athermal effect of about +3 pm/k, and when the thickness of the slab is about 50 nm, the TE mode has an athermal effect and when the thickness of slab is about 55 nm, the TM mode has an athermal effect.

An athermal waveguide is an important technology in terms of low power consumption in the optical interconnection technology. When the athermal waveguide is applied, a power/bit transmission efficiency may be increased without having to use energy for thermal tuning of a wavelength adjusting device sensitive to a thermal change.

An athermal waveguide according to an example embodiment may satisfactorily operate as a waveguide both in a TE mode and a TM mode since an athermal material is disposed almost at a center of a mode profile in a structure of a rib, a ridge, and a channel (strip) of the waveguide, with respect to polarization in the TE and TM modes. Accordingly, an athermal waveguide may be insensitive to polarization.

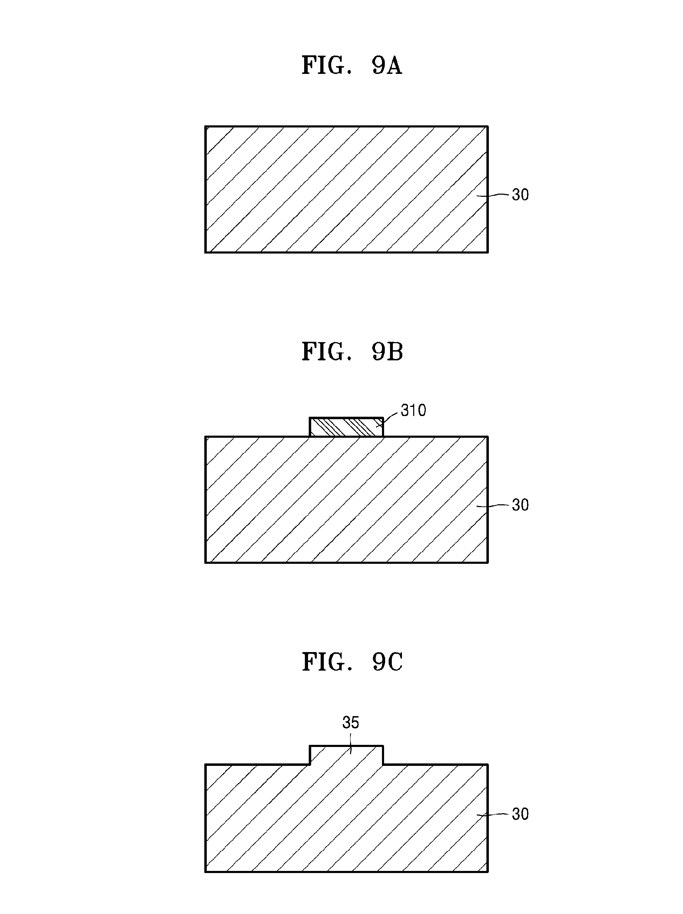

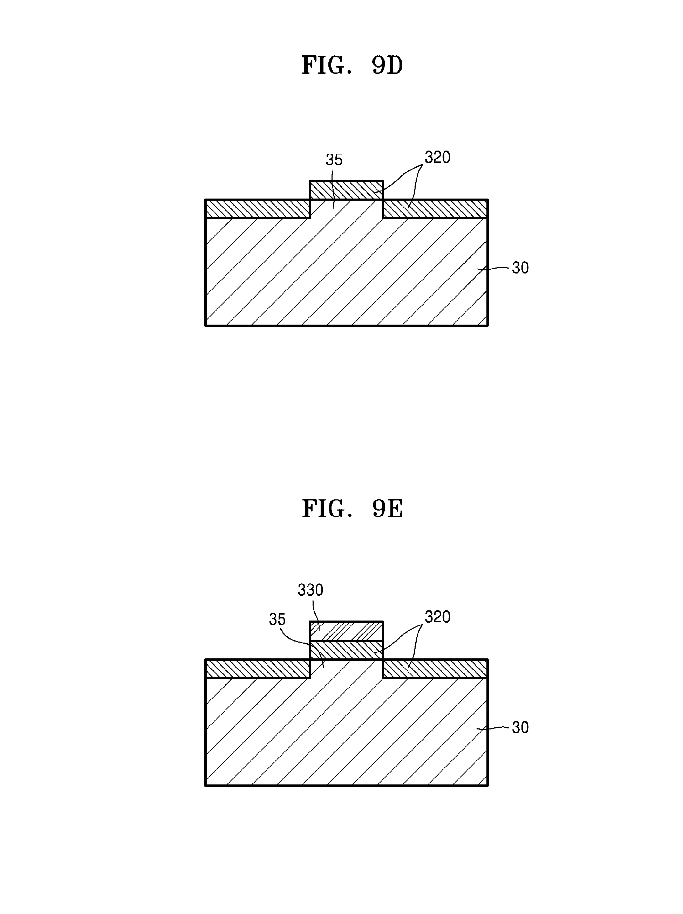

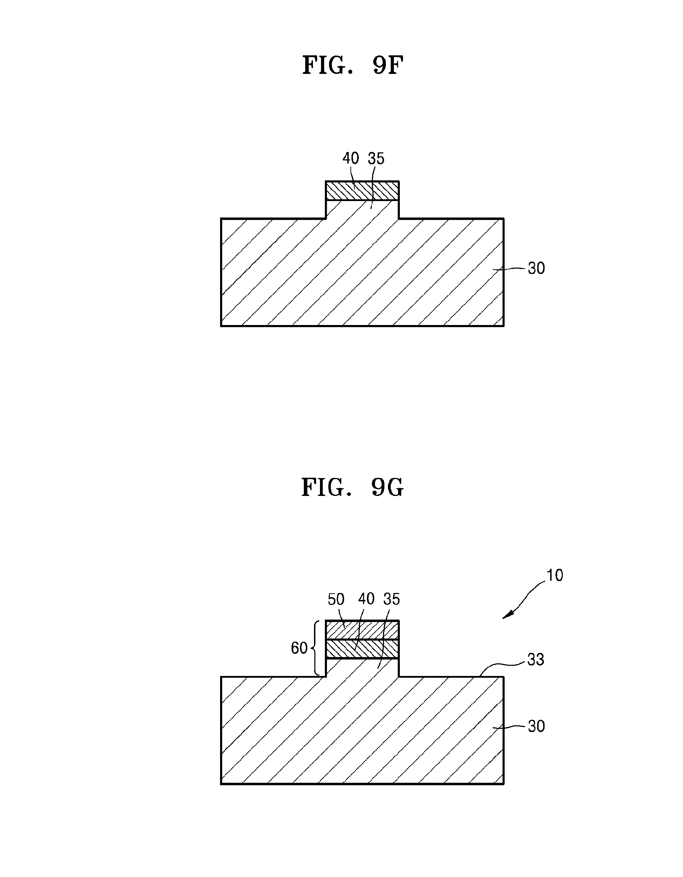

FIGS. 9A through 9G are diagrams for describing a method of manufacturing an athermal waveguide, according to an example embodiment.

The method may be used to manufacture the athermal waveguides 10 and 100 of FIGS. 1 and 4.

Referring to FIG. 9A, the substrate 30 is prepared first. The substrate 30 may be a silicon substrate or an SOI substrate in which the insulation layer 31 is embedded, or alternatively, may be any one of various semiconductor substrates, a glass substrate or plastic substrate suitable for manufacturing a waveguide for optical transmission.

As shown in FIG. 9B, an etch stop layer 310 is patterned on the substrate 30 in a region where the protruded region 35 is to be formed. Then, when the substrate 30 is etched and the etch stop layer 310 is removed, the structure where the protruded region 35 is formed on the substrate 30 is obtained as shown in FIG. 9C.

Then, as shown in FIGS. 9D through 9F, an athermal material layer 320 is stacked to cover the substrate 30 having the protruded region 35, an etch stop layer 330 is patterned on the athermal material layer 320 to correspond to the protruded region 35, the athermal material layer 320 disposed outside of a region corresponding to the protruded region 35 is removed by performing an etch process, and the etch stop layer 330 is removed, thereby obtaining a structure wherein the first material layer 40 is only disposed on the protruded region 35.

Then, as shown in FIG. 9G, a second material layer 50 is formed on the first material layer 40. Thus, obtaining the athermal waveguide 10 of FIG. 1 having the waveguide region 60 including the protruded region 35, the first material layer 40, and the second material layer 50 described above with reference to FIG. 1.

Also, when the cladding 70 is further formed by using an oxide or a nitride to cover the stacked structure and the top surface 33 of the substrate 30, the athermal waveguide 100 of FIG. 4 may be obtained.

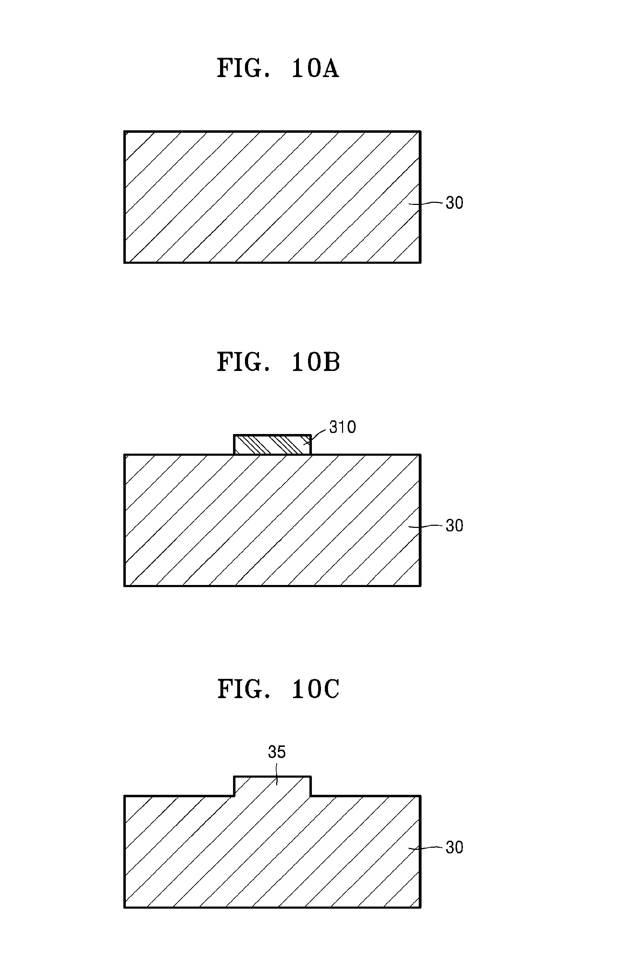

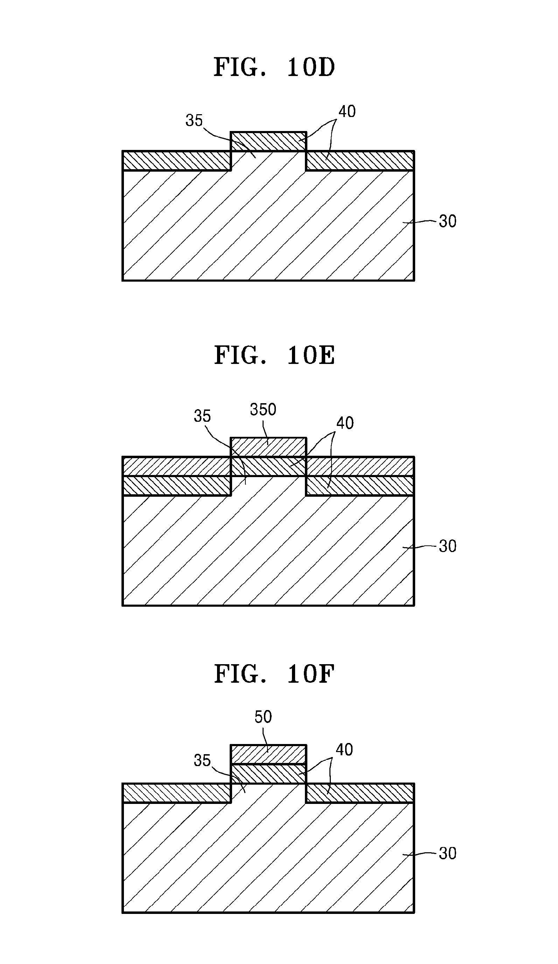

FIGS. 10A through 10F are diagrams for describing a method of manufacturing an athermal waveguide, according to another example embodiment.

The method of FIGS. 10A through 10F may be used to manufacture the athermal waveguide 200 of FIG. 5.

Referring to FIG. 10A, the substrate 30 is prepared first. The substrate 30 may be a silicon substrate or an SOI substrate in which the insulation layer 31 is embedded, or alternatively, may be any one of various semiconductor substrates, a glass substrate or a plastic substrate suitable for manufacturing a waveguide for optical transmission.

As shown in FIG. 10B, an etch stop layer 310 is patterned on the substrate 30 in a region where the protruded region 35 is to be formed. Then, when the substrate 30 is etched and the etch stop layer 310 is removed, the protruded region 35 is formed on the substrate 30 as shown in FIG. 10C.

Then, as shown in FIGS. 10D through 10E, the first material layer 40 is stacked by using an athermal material to cover the substrate 30 having the protruded region 35, and a material layer 350 is stacked on the first material layer 40 by using a same base material as the protruded region 35.

Then, as shown in FIG. 10F, when the material layer 350 is etched such that only a region on the first material layer 40 corresponding to the protruded region 35 is left. Thus, obtaining the athermal waveguide 10 of FIG. 1 including the stacked structure of the protruded region 35, the first material layer 40 covering the protruded region 35 and the top surface 33 of the substrate 30, and the second material layer 50 formed on the first material layer 40 in a region corresponding to the protruded region 35 may be obtained. Further, when the cladding 70 is further formed by using an oxide or a nitride to cover the stacked structure of the protruded region 35, the first material layer 40, and the second material layer 50, and the top surface 33 of the substrate 30, the athermal waveguide 200 of FIG. 5 may be obtained.

As described above, according to the one or more of the above example embodiments, since a first material layer, i.e., an athermal material, that counteracts thermal expansion is disposed at a center of a waveguide region having a stacked structure of a protruded region, the first material layer, and a second material layer, an athermal waveguide satisfactorily operates both in a TE mode and a TM mode. Also, the athermal waveguide may be insensitive to polarization, therefore, thermal tuning to prevent a change in wavelength due to a thermal change may not be required.

It should be understood that the example embodiments described therein should be considered in a descriptive sense only and not for purposes of limitation. Descriptions of features or aspects within each embodiment should typically be considered as available for other similar features or aspects in other embodiments.

## Claims

1. An athermal waveguide comprising:
a substrate having a protruded region;
a first material layer formed on the protruded region, the first material layer configured to counteract thermal expansion; and
a second material layer formed on the first material layer at a position corresponding to the protruded region and formed of a same base material as the protruded region.

2. The athermal waveguide of claim 1, wherein the first material layer is a layer formed of one of a semiconductor, polymer, titanium oxide, and dielectric material.

3. The athermal waveguide of claim 1 or 2, wherein the protruded region is formed of crystalline silicon, and the second material layer is formed of one of amorphous silicon and polysilicon.

4. The athermal waveguide of any of claims 1 to 3, wherein the protruded region is formed by etching the substrate.

5. The athermal waveguide of any preceding claim, wherein the protruded region, the first material layer, and the second material layer form a stacked structure that protrudes with respect to a top surface of the substrate, and wherein the stacked structure is exposed in air.

6. The athermal waveguide of claim 5, further comprising:
a cladding formed to cover the stacked structure and at least a part of a remaining top surface of the substrate, and wherein the cladding is formed of one of oxide and nitride.

7. The athermal waveguide of any preceding claim, wherein the first material layer is formed to cover the protruded region and a remaining top surface of the substrate, and the second material layer is formed on the first material layer at position corresponding to the protruded region.

8. The athermal waveguide of claim 7, further comprising:
a cladding formed to cover a stacked structure of the protruded region, the first material layer, and the second material layer, and at least a part of a remaining top portion of the second material layer, and wherein the cladding is formed of one of oxide and nitride.

9. A method of manufacturing an athermal waveguide, the method comprising:
etching a substrate such that a protruded region is formed;
forming, on the protruded region, a first material layer configured to counteract thermal expansion; and
forming a second material layer on the first material layer by using a same base material as the protruded region, at a position corresponding to the protruded region.

10. The method of claim 9, wherein the protruded region, the first material layer, and the second material layer form a stacked structure that protrudes with respect to a top surface of the substrate, and wherein the stacked structure is exposed in air.

11. The method of claim 10, further comprising:
forming cladding to cover the stacked structure and at least a part of a remaining top surface of the substrate, and wherein the cladding is formed of one of oxide and nitride.

12. The method of claim 9, 10 or 11, wherein the first material layer is formed to cover the protruded region and a remaining top surface of the substrate, and the second material layer is formed on a region of the first material layer at a position corresponding to the protruded region.

13. The method of claim 12, further comprising:
forming a cladding to cover a stacked structure of the protruded region, the first material layer, and the second material layer, and at least a part of a remaining top portion of the second material layer.

14. The method of claim 12 or 13, wherein the first material layer is a layer formed of one of a semiconductor, polymer, titanium oxide, and dielectric material.

15. The method of claim 12, 13 or 14, wherein the protruded region is formed of crystalline silicon, and the second material layer is formed of one of amorphous silicon and polysilicon.
